# EUROPÄISCHE PATENTSCHRIFT

(11) **EP 3 642 268 B1**
(45) Veröffentlichungstag und Bekanntmachung des Hinweises auf die Patenterteilung: **14.07.2021**
(21) Anmeldenummer: 18717003.0
(22) Anmeldetag: 05.04.2018
(51) Int. Cl.: C08J 5/18, C08L 67/02, B32B 27/36, B32B 27/10, B32B 27/08, B29B 7/00, B29B 7/90, B29C 48/40, B32B 27/18, B32B 27/20, B32B 27/22, B32B 29/00, B32B 29/08

(54) **BIOLOGISCH ABBAUBARE DREISCHICHTFOLIE**
BIODEGRADABLE THREE-LAYER FILM
FILM BIODÉGRADABLE À TROIS COUCHES

(30) Priorität: 19.06.2017 EP 17176626
(43) Veröffentlichungstag der Anmeldung: 29.04.2020
(73) Patentinhaber: BASF SE, 67056 Ludwigshafen am Rhein (DE)
(72) Erfinder: LOOS, Robert, 67056 Ludwigshafen (DE); AUFFERMANN, Joerg, 67056 Ludwigshafen (DE); EFFEN, Norbert, 67056 Ludwigshafen (DE); SCHLUTT, Nora, 67056 Ludwigshafen (DE); SINKEL, Carsten, 67056 Ludwigshafen (DE); LOHMANN, Jerome, 67056 Ludwigshafen (DE); SKUPIN, Gabriel, 67056 Ludwigshafen (DE); KUENKEL, Andreas, 67056 Ludwigshafen (DE)
(74) Vertreter: BASF IP Association
(86) Internationale Anmeldenummer: PCT/EP2018/058735
(87) Internationale Veröffentlichungsnummer: WO 2018/233888

(56) Entgegenhaltungen:
- EP-A2- 1 099 544
- WO-A1-02/059199
- WO-A1-2013/017431
- US-A1- 2013 029 124
- BASF: "ecofl ex F Blend C1200", , 1. Januar 2013 (2013-01-01), Seiten 1-3, XP055419682, Gefunden im Internet: URL:https://www.plasticsportal.net/wa/EU/C atalog/ePlastics/doc4/BASF/product/ecoflex _f_blend_c1200/.pdf?asset_type=pi/pdf&lang uage=EN&urn=urn:documentum:eCommerce_sol_E U:09007bb28016fe27.pdf [gefunden am 2017-10-27]

## Beschreibung

Die Erfindung betrifft eine biologisch abbaubare, 8 bis 20 µm dicke Dreischicht-Polyesterfolie mit einem Schichtaufbau A/B/C oder vorzugsweise A/B/A, wobei die beiden Außenschichten (A) oder (A, C) sich zusammensetzen aus:
Ai) 55 bis 99,99 Gew.-%, bezogen auf die Polyestermischung der Außenschichten, eines Polyesters ausgewählt aus der Gruppe bestehend aus: Polybutylensebacat-co-terephthalat, Polybutylensebacat-co-adipat-co-terephthalats, Polybutylensebacat-cosuccinat-co-terephthalats oder Mischungen daraus oder einer Mischung von Polybutylensebacat-co-terephthalat und Polybutylenadipat-co-terephthalat;
Aii) 0,01 bis 5 Gew.-%, bezogen auf die Polyestermischung der Außenschichten, mindestens eines Additivs ausgewählt aus der Gruppe bestehend aus: einem Wachs, einem Weichmacher, einem Nukleiierungsmittel, Antifogmittel, Füllstoff und einem Antiblockmittel; und
Aiii) 0 bis 44,99 Gew.-%, bezogen auf die Polyestermischung der Außenschichten, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
und die Mittelschicht B sich zusammensetzt aus:
Bai) 40 bis 75 Gew.-%, bezogen auf die Mischung der Mittelschicht, eines biologisch abbaubaren, aliphatisch-aromatischen Polyesters;
Baii) 25 bis 40 Gew.-%, bezogen auf die Mischung der Mittelschicht, Stärke mit einem Weichmachergehalt von 0 bis 5 Gew.-%, bezogen auf das Gesamtgewicht der Komponente Baii); und
Baiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
   oder
Bbi) 25 bis 70 Gew.-%, bezogen auf die Mischung der Mittelschicht, eines biologisch abbaubaren, aliphatisch-aromatischen Polyesters
Bbii) 30 bis 55 Gew-%, bezogen auf die Mischung der Mittelschicht, Stärke mit einem Weichmacheranteil von 5 bis 35 Gew.-%, bezogen auf das Gesamtgewicht der Komponente Bbii); und
Bbiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung.

Weiterhin betrifft die Erfindung Dreischicht-Polyesterfolien der obengenannten Zusammensetzung und Schichtdicke, die eine Sauerstoffdurchlässigkeit nach ASTM D3985-05:2010 zwischen 5500 und 18000 ml/m²/Tag und vorzugsweise von 6000 bis 12000 ml/m²/Tag von einer Wasserdampfdurchlässigkeit gemessen nach ASTM F1249:2013 von 200 bis 1000 vorzugsweise von 400 bis 800 g/m²/Tag aufweisen.

Lebensmittel wie Obst und Gemüse werden zum Transport aus hygenischen Gründen - sowie aus Haltbarkeitsgründen in Kunststofffolien verpackt. Hierbei werden an die Folien hohe Anforderungen hinsichtlich der Weiterreißfestigkeit und der Transparenz gestellt. Die meisten verderblichen Lebensmittel werden in nicht biologisch abbaubaren Kunststofffolien wie Polypropylen-, Polyethylen- und Polyvinylchlorid-Folien verpackt. Dies hat den Nachteil, dass bereits verdorbene Ware einschließlich der Verpackung verbrannt werden muss, was allein schon aufgrund des hohen Wassergehalts des Lebensmittels ökologisch nicht sinnvoll ist. Unter den biologisch abbaubaren, sehr dünnen (8 bis 20 µm) Folien haben sich insbesondere Stärkehaltige Folien am Markt durchgesetzt. Sie weisen in der Regel eine hohe Weiterreißfestigkeit auf, können jedoch hinsichtlich der Transparenz nicht überzeugen. Beispielsweise der Einsatz von vollautomatischen Kassen setzt eine hohe Transparenz der Verpackungsfolie voraus.

Überraschenderweise wurden die eingangs beschriebenen Dreischichtfolien gefunden, die neben der guten Weiterreißfestigkeit insbesondere in Querrichtung eine hohe Transparenz aufweisen.

Die Haltbarkeit von frischem Obst und Gemüse hängt sehr stark von seiner Lagerung und dem Transport ab. Einen wesentlichen Einfluß auf die Haltbarkeit hat insbesondere auch die Art seiner Verpackung. Die meisten verderblichen Lebensmittel benötigen Verpackungen mit einer hohen Sauerstoff- und Wasserdampfdurchlässigkeit.

Eine zu niedrige Sauerstoffdurchlässigkeit der Folie führt zu einem Sauerstoffüberangebot innerhalb der Verpackung und somit zu einer beschleunigten Reifung des verpackten Lebensmittels. Dadurch verringert sich die Haltbarkeit des verpackten Lebensmittels.

Eine zu niedrige Wasserdampfdurchlässigkeit der Folie führt zur Kondensation von Wasser innerhalb der Verpackung und kann damit die Fäulnis und Schimmelbildung begünstigen. Auch hierdurch verringert sich die Haltbarkeit des verpackten Lebensmittels.

Ein weiteres Ziel der vorliegenden Erfindung war es demnach für bestimmte Lebensmittel, wie Karotten, Pilze, Rosenkohl und Salat eine optimierte Verpackung aus einem biologisch abbaubaren Material bereitzustellen, die neben der erforderlichen Weiterreißfestigkeit und Transparenz für das jeweilige Lebensmittel eine verlängerte Haltbarkeit garantiert.

Im Folgenden wird die Erfindung näher beschrieben:
Die zuvor genannte biologisch abbaubare, 8 bis 20 µm dicke Dreischicht-Polyesterfolie mit einem Schichtaufbau A/B/C oder vorzugsweise A/B/A, wobei die beiden Außenschichten (A) oder (A, C) sich zusammensetzen aus:
Ai) 55 bis 99,99 Gew.-%, vorzugsweise 70 bis 99,9 Gew.-% und insbesondere bevorzugt 90 bis 99,9 Gew.-%, bezogen auf die Polyestermischung der Außenschichten, eines Polyesters ausgewählt aus der Gruppe bestehend aus: Polybutylensebacat-co-terephthalat, Polybutylensebacat-co-adipat-co-terephthalats, Polybutylensebacat-co-succinat-co-terephthalats oder Mischungen daraus oder einer Mischung von Polybutylensebacat-co-terephthalat und Polybutylenadipat-co-terephthalat;
Aii) 0,01 bis 5 Gew.-%, vorzugsweise 0,1 bis 5 Gew.-%, bezogen auf die Polyestermischung der Außenschichten, mindestens eines Additivs ausgewählt aus der Gruppe bestehend aus: einem Wachs, einem Weichmacher, einem Nukleiierungsmittel, Antifogmittel, Füllstoff und einem Antiblockmittel; und
Aiii) 0 bis 44,99 Gew.-%, vorzugsweise 1 bis 29,9 Gew.-% und insbesondere bevorzugt 0 bis 9,9 Gew.-%, bezogen auf die Polyestermischung der Außenschichten, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
und die Mittelschicht B sich zusammensetzt aus:
Bai) 40 bis 75 Gew.-%, vorzugsweise 50 bis 75 Gew.-%, bezogen auf die Mischung der Mittelschicht, eines biologisch abbaubaren, aliphatisch-aromatischen Polyesters;
Baii) 25 bis 40 Gew.-%, bezogen auf die Mischung der Mittelschicht, Stärke mit einem Weichmachergehalt von 0 bis 5 Gew.-%, bezogen auf das Gesamtgewicht der Komponente Baii); und
Baiii) 0 bis 20 Gew.-%, vorzugsweise 0 bis 10 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
   oder
Bbi) 25 bis 70 Gew.-%, vorzugsweise 35 bis 70 Gew.-%, bezogen auf die Mischung der Mittelschicht, eines biologisch abbaubaren, aliphatisch-aromatischen Polyesters;
Bbii) 30 bis 55 Gew.-%, bezogen auf die Mischung der Mittelschicht, Stärke mit einem Weichmacheranteil von 5 bis 35 Gew.-%, bezogen auf das Gesamtgewicht der Komponente Bbii); und
Bbiii) 0 bis 20 Gew.-%, vorzugsweise 0 bis 10 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung sind erfindungsgemäß.

Insbesondere bevorzugt sind weiterhin 8 bis 20 µm dicke Dreischichtfolien mit einem Schichtaufbau A/B/C oder vorzugsweise A/B/A mit einer Sauerstoffdurchlässigkeit gemessen nach ASTM D3985-05:2010 zwischen 5500 und 18000 vorzugsweise von 6000 bis 12000 und insbesondere Bevorzugt von 6500 bis 9000 ml/m²/Tag, wobei die beiden Außenschichten (A) oder (A, C) und die Mittelschicht (B) die zuvor genannte Zusammensetzung aufweisen.

Die Außenschichten A) oder (A, C) machen in der Regel jeweils 5 bis 30%, vorzugsweise 8 bis 25% und insbesondere bevorzugt 8 bis 20% der Gesamtschicht der Dreischichtfolie aus.

Prinzipiell kommen für die Herstellung der biologisch abbaubaren Polyester oder Polyestemischungen in den Aussenschichten (A) und ggf. (C) sowie in der Mittelschicht (B) die obengenannten teilaromatische oder aliphatisch-aromatischen Polyester in Betracht. Gemeinsam ist diesen Polyestern, dass sie biologisch abbaubar nach DIN EN 13432 sind.

Unter biologisch abbaubaren, aliphatisch-aromatischen Polyestern (Komponenten Ai) sollen erfindungsgemäß auch Polyesterderivate verstanden werden wie bis zu 10 Gew-% Polyetherester, Polyesteramide oder Polyetheresteramide und Polyesterurethane enthalten. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften, WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO-A 2010/034710). Insbesondere sind unter teilaromatischen Polyestern Produkte wie ecoflex® (BASF SE) und Origo-Bi® (Novamont) zu verstehen.

Zu den besonders bevorzugten aliphatisch-aromatischen Polyestern zählen Polyester, die als wesentliche Komponenten:
A) eine Säurekomponente aus
   a1) 30 bis 99 mol-%, vorzugsweise 40 bis 60 mol-% einer Sebazinsäure oder Mischungen oder deren esterbildende Derivate oder Mischungen davon, oder Mischungen von Sebazinsäure mit Adipinsäure oder Bernsteinsäure;
   a2) 1 bis 70 mol-%, vorzugsweise 40 bis 60 mol-% einer Terephthalsäure oder deren esterbildendem Derivat oder Mischungen davon und
B) 98,5 bis 100 mol%, bezogen auf die Säurekomponente A, einer Diolkomponente 1,4-Butanediol;
   und
C) 0 bis 1,5 mol%, vorzugsweise 0,01 bis 0,5 mol%, bezogen auf die Säurekomponente A, einer Komponente ausgewählt aus
   c1) einer Verbindung mit mindestens drei zur Esterbildung befähigten Gruppen,
   c2) eines Di- oder Polyisocyanates,
   c3) eines Di- oder Polyepoxids
      oder Mischungen aus c1) bis c3) enthalten.

Erfindungsgemäß werden Bernsteinsäure, Adipinsäure und Sebacinsäure, oder deren jeweilige esterbildenden Derivate oder Mischungen davon eingesetzt. Bernsteinsäure und Sebacinsäure haben ferner den Vorteil, dass sie aus nachwachsenden Rohstoffen zugänglich sind. Besonders bevorzugt wird Adipinsäure oder Sebacinsäure oder deren jeweilige esterbildenden Derivate oder Mischungen davon eingesetzt.

Erfindungsgemäß sind die folgenden teilaromatischen Polyester: Polybutylensebacat-co-terephthalat (PBSeT), oder Polybutylensebacat-co-adipat-co-terephthalat (PBSeAT) oder Polybutylensebacat-co-succinat-co-terephthalat (PBSeST) oder Mischungen daraus oder eine Mischung von Polybutylensebacat-co-terephthalat (PBSeT) und Polybutylenadipat-co-terephthalat (PBAT).

Bei den Copolymeren Polybutylensebacat-co-adipat-co-terephthalat oder Polybutylensebacat-co-succinat-co-terephthalat der Außenschichten hat sich für eine hohe Transparenz und Sauerstoffdurchlässigkeit der Folien von Vorteil erwiesen, dass das Verhältnis der aliphatischen Dicarbonsäuren: Sebazinsäure zu Adipinsäure bzw. Bernsteinsäure bei 20:1 bis 1:2, vorzugsweise bei 15:1 bis 1:1 liegt. Auch bei den Mischungen aus Polybutylensebacat-co-terephthalat und Polybutylenadipat-co-terephthalat hat sich für eine hohe Transparenz und Sauerstoffdurchlässigkeit von Vorteil erwiesen, dass das Verhältnis der teilaromatischen Polyester PBSeT und PBAT bei 20:1 bis 1:2, vorzugsweise bei 15:1 bis 1:1 liegt. Aus dem gleichen Grund ist das Polybutylensebacat-co-terephthalat als alleinige alleinige aliphatisch-aromatische Polyesterkomponente in den Außenschichten besonders bevorzugt.

Die bevorzugten teilaromatischen Polyester sind charakterisiert durch ein Molekulargewicht (Mₙ) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Im weiteren werden die Vorteile des Zusatzes einer Komponente Aii in den Außenschichten beschrieben.

In Komponente Aii wird in der Regel Wachs zugesetzt. Unter Wachs versteht man beispielsweise C₁₈-C₂₄ Carbonsäureamide wie Stearinsäureamid, Erucasäureamid oder Behenamid, oder Bienenwachs oder Bienenwachsester. Durch den Zusatz von Wachsen in 0,01 bis 1 Gew.-% und besonders bevorzugt 0,05 bis 1 Gew.-%, bezogen auf die Polymermischung, kann die Wasserdampfdurchlässigkeit der Polyesterfolie gemessen nach ASTM F1249:2013 auf Werte unter 300 g/m²/Tag eingestellt werden. Auch eine Erhöhung der Schichtdicke der Polyesterfolie führt zu einer Reduktion ihrer Wasserdampfdurchlässigkeit.

Durch den Zusatz eines Weichmachers (z.B. Citrofol) kann man das Rückstellverhalten der Folien verbessern. Die Folien kehren nach einer mechanischen Belastung, z.B. Fingereindruck, wieder zurück in ihre ursprüngliche Form. Antifogmittel (wie beispielsweise ethoxylierte Sorbitanester wie z.B. Atmer) sind in der Regel Tenside, die an der Folienoberfläche dafür sorgen, dass sich auch bei hoher Luftfeuchtigkeit keine störenden Wassertropfen bilden. Es bildet sich lediglich ein Wasserfilm, der die Optik der Folie nicht stört.

Antiblockmittel (z.B. Calciumcarbonat) sind Verarbeitungshilfsmittel, die das "Blocken" von zwei Kunststofffolien verhindern und damit die Folien separierbar machen.

Weiterhin kann die erfindungsgemäße Außenschicht der Polyesterfolie weitere dem Fachmann bekannte, Additive enthalten. Beispielsweise die in der Kunststofftechnik üblichen Zusatzstoffe wie Stabilisatoren; Antistatikum, UV-Absorber; Verträglichkeitsvermittler wie ein Epoxidgruppenhaltiges Copolymer auf Basis Styrol, Acrylsäureester und/oder Methacrylsäureester oder Farbstoffe. Diese Additive werden in der Regel in Konzentrationen von 0 bis 2 Gew.-%, insbesondere 0,1 bis 1 Gew.-% bezogen auf die erfindungsgemäße Polyestermischung eingesetzt.

Weiterhin kann die erfindungsgemäße Außenschicht der Polyesterfolie bis 44,99 Gew,-%, vorzugsweise 1 bis 29,9 Gew.-% und insbesondere bevorzugt 0 bis 10 Gew.-%, bezogen auf das Gesamtgewicht der Außenschichten, weitere biologisch abbaubare Polymere (Komponente Aiii) ausgewählt aus der Gruppe bestehend aus: Polymilchsäure (PLA), Polycaprolacton (PCL), Polypropylencarbonat, Polyhydroxyalkanoat oder Polyester, hergestellt aus aliphatischen Dicarbonsäuren und einer aliphatischen Dihydroxyverbindung zugesetzt werden.

Polymilchsäure wird vorzugsweise in einer Menge von 1 bis 44,99 Gew.-%, vorzugsweise 1 bis 35 Gew.-%, besonders bevorzugt 4 bis 18 Gew.-%, bezogen auf das Gesamtgewicht der Aussenschicht, zugesetzt.

PLA mit dem folgenden Eigenschaftsprofil wird bevorzugt eingesetzt:
- einer Schmelzvolumenrate (MVR) nach EN ISO 1133 (190°C, 2,16 kg Gewicht) von 0.5 bis 30 insbesondere 2 bis 40 cm³/10min)
- einem Schmelzpunkt unter 240° C;
- einem Glaspunkt (Tg) größer 55°C
- einem Wassergehalt von kleiner 1000 ppm
- einem Monomeren-Restgehalt (Lactid) von kleiner 0.3%.
- einem Molekulargewicht von größer 80 000 Dalton.

Bevorzugte Polymilchsäuren sind beispielsweise Ingeo® 8052D, 6201D, 6202D, 6251D, 3051D, 3052D und insbesondere Ingeo® 4020D, 4032D, 4043D oder 4044D (Polymilchsäure der Fa. NatureWorks) oder Luminy® L175, L130, L105 oder LX175 der Fa. Corbion.

Durch den Zusatz von PLA im beanspruchten Mengenbereich können die Eigenschaften der Polyesterfolie (Durchstoßfestigkeit und Weiterreißfestigkeit) hergestellt aus der Polymermischung nochmal deutlich verbessert werden. Es können auch Mischungen von leichtfließendem und höher viskosem PLA eingesetzt werden.

Weiterhin können aliphatischen Polyester vorzugsweise in 5 bis 45 Gew.-%, bezogen auf das Gesamtgewicht der Außenschicht eingesetzt werden.

Unter aliphatischen Polyestern werden auch Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyester mit einer Polyesteramid- oder Polyesterurethan-Teilstruktur verstanden. Die aliphatischen Polyester werden beispielsweise von den Firmen Mitsubishi unter dem Namen BIOPBS vermarktet. Neuere Entwicklungen sind in der WO-A 2010/034711 beschrieben.

Ähnliche Effekte findet man, wenn zu den Polyesterfolien 1 bis 30 Gew.-%, oder vorzugsweise 4 bis 20 Gew.-%, bezogen auf das Gesamtgewicht der Außenschicht, eines Polyhydroxyalkanoats zugesetzt werden.

Unter Polyhydroxyalkanoaten werden in erster Linie Poly-4-hydroxybutyrate und Poly-3-hydroxybutyrate und Copolyester der vorgenannten Poly-Hydroxybutyrate mit 3-Hydroxyvalerat, 3-Hydroxyhexanoat und/oder 3-Hydroxyoctanoat verstanden. Poly-3-hydroxybutyrate werden beispielsweise von der Fa. PHB Industrial unter dem Markennamen Biocycle®und von der Fa. Tianan unter dem Namen Enmat® vertrieben.
Poly-3-hydroxybutyrate-co-4-hydroxybutyrate sind insbesondere von der Fa. Metabolix bekannt. Sie werden unter dem Handelsnamen Mirel® vertrieben.
Poly-3-hydroxybutyrate-co-3-hydroxyhexanoate sind von der Firma Kaneka bekannt. Poly-3-hydroxybutyrate-co-3-hydroxyhexanoate weisen in der Regel einen
3-Hydroxyhexanoatanteil von 1 bis 20 und vorzugsweise von 3 bis 15 mol% bezogen auf das Polyhydroxyalkanoat auf. Die Polyhydroxyalkanoate weisen in der Regel ein Molekulargewicht Mw von 100.000 bis 1.000.000 und vorzugsweise von 300.000 bis 600.000 auf.

Als Mittelschicht B hat die zuvor genannte Zusammensetzung und enthält thermoplastische Stärke, wobei der Weichmachergehalt unterschiedlich sein kann.

Die Dicke der Mittelschicht beträgt in der Regel 40 bis 90%, vorzugsweise 50 bis 84% und insbesondere bevorzugt 60 bis 84% der Gesamtschicht der Dreischichtfolie.

Unter aliphatisch-aromatischen Polyestern werden die bei der Außenschicht diskutierten Polyester, Polyestermischungen oder Copolyester verstanden. Bevorzugt werden in der Mittelschicht die aliphatisch-aromatischen Polyester Polybutylensebacat-co-terephthalat oder Polybutylenadipat-co-terephthalat oder Mischungen aus diesen beiden Polyestern eingesetzt.

Bei der Stärke wird zwischen nativer und thermoplastischer Stärke unterschieden. Native Stärke liegt in Form von hochkristallinen Körnern (Granula) vor, deren Schmelzpunkt oberhalb ihrer Zersetzungstemperatur liegt. Aufgrund des nicht unbeträchtlichen Anteils an größeren Granulatkörnchen mit mehr als 10 Mikrometern Durchmesser bei z.B. Mais-, Weizen- oder Kartoffelstärke ist keine Herstellung qualitativ hochwertiger dünner Folien möglich. Daher hat es sich bei der Herstellung von biologisch abbaubaren Polymerblends bewährt, die Stärke zunächst unter Aufbrechen ihrer granulären und kristallinen Struktur vollständig zu thermoplastifizieren.

Die Verfahren dazu lassen sich grob in 2 Richtungen unterscheiden:
1) Zum einen kann die Plastifizierung nativer Stärke unter Verwendung geeigneter polarer Weichmacher (z.B. Glycerin, Sorbitol, Oligo-Glycerin oder Mischungen davon) in einem Extruder unter Verwendung von Temperatur und Scherung erfolgen, wobei üblicherweise Weichmacheranteile zwischen 20 bis35% (bezogen auf wasserfreie Stärke) eingesetzt werden. Das in der Stärke vorhandene Wasser wird dabei in der Regel während dem Extrusionsvorgang entfernt (siehe z.B. EP-A 539 541, EP-A 575 349, EP-A 652 910). Die dadurch erhaltene vollständig plastifizierte Stärke kann entweder a) isoliert werden und in einem zweiten separaten Extrusionsschritt mit dem biologisch abbaubaren Polymer vermischt werden, oder b) das Plastifizieren der Stärke und das Vermischen mit dem biologisch abbaubaren Polymer erfolgt in einem einzigen Extrusionsschritt. Beispiele für a) ist z.B. die kommerziell erhältliche thermoplastische Stärke der Fa. Agrana (Amitroplast® 8940, während das Verfahren b) z.B. von der Fa. Novamont ausgeübt wird (MaterBi®).
2) Andererseits ist es auch möglich, das intern in der nativen Stärke gebundene Wasser zur Thermoplastifizierung der Stärke zu benutzten, wobei ebenfalls ein Extrusionsprozess auf z.B. einem Doppelschneckenextruder unter Einbringen von Temperatur und Scherenergie benutzt wird, ohne dass externe Weichmacher zugesetzt werden müssen. Vor allem für Kartoffelstärke mit seinem hohen nativen Wassergehalt von ca. 18-20 % ist dieses Verfahren von der Fa. Biotec (BioPlast®) in beispielsweise WO 2002/16468 oder US 7,214,414 beschrieben.

Die Mittelschicht enthaltend thermoplastische Stärke, fördert sowohl eine gute Abbaubarkeit im Boden als auch gute mechanische Eigenschaften wie insbesondere eine hohe Weiterreißfestigkeit der Dreischichtfolie.

Weiterhin kann die Mittelschicht bis 20 vorzugsweise bis 10 Gew.-% bezogen auf das Gesamtgewicht der Mittelschicht eines weiteren biologischen abaubaren Polymeren ausgewählt aus der Gruppe bestehend aus Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung enthalten. Die biologisch abbaubaren Polymere weisen dabei die zuvor genannten bevorzugten strukturellen Ausgestaltungen auf.

Weiterhin kann die Dreischicht-Polyesterfolie beispielsweise in der Mittelschicht anorganische Füllstoffe enthalten wie Ruß, Graphit, Calziumcarbonat, Talk, Silikat, Kaolin, Wollastonit, Glimmer, Montmorellonit, Muskovit oder Eisenoxid. In transparenten Folien werden vorzugsweise feinteilige Füllstoffe in Konzentrationen kleiner 10 Gew.-% und vorzugsweise kleiner 5 Gew.-%, bezogen auf das Gesamtgewicht der Dreischichtfolie verwandt.

Von Vorteil für die Herstellung der erfindungsgemäßen Dreischichtfolien ist, wenn sich die Schmelzvolumenrate (MVR) der Mittelschicht und diejenige der Außenschichten, gemessen nach EN ISO 1133 (190°C, 5 kg Gewicht) bei einem Wassergehalt der Mittelschicht kleiner 2000 ppm, um nicht mehr als 5 cm³/10 min voneinander abweichen.

Insbesondere bevorzugt ist der MVR der Mittelschicht gemessen bei einem Wassergehalt kleiner 2000 ppm gleich groß oder vorzugsweise um 0,5 bis 3 cm³/10 min niedriger als der MVR der Außenschichten, jeweils gemessen nach EN ISO 1133 (190°C, 5 kg Gewicht). Der MVR der Mittelschicht liegt vorzugsweise im Bereich von 0,5 bis 11 cm³/10 min und insbesondere bevorzugt bei 2 bis 8 cm³/10 min und derjenige der Außenschichten vorzugsweise im Bereich von 2,5 bis 11 cm³/10 min und vorzugsweise im Bereich von 3 bis 10 cm³/10 min.

Die erfindungsgemäßen Polyesterfolien umfassen auch Mehrschichtfolien mit mehr als drei Schichten sie die erfindungsgemäßen Außenschichten und Mittelschicht aufweisen.

Zur Herstellung der Dreischichtfolien wird insbesondere das Verfahren der Coextrusion angewendet. Hierbei hat sich als vorteilhaft erwiesen, dass die Außenschichten der Dreischichtfolie keine flüchtigen Weichmacher wie Glycerin oder Sorbitol enthalten. Bei der Herstellung und Verarbeitung der Dreischicht-Polyesterfolie kann das Austreten dieser Weichmacher ganz oder zumindest nahezu verhindert werden, was aus Gründen der Arbeitshygiene von Vorteil ist. Weiterhin führt die obengenannte Ausgestaltung der Schmelzvolumenraten (MVR) bei Außenschichten und Mittelschicht zu einem prozeßfähigen Verfahren. Der Neck-In der Mehrschichtfolien ist bei der Herstellung der coextrudierten Folien besonders gering, wenn der MVR der Mittelschicht gemessen bei einem Wassergehalt kleiner 2000 ppm gleich groß oder vorzugsweise um 0,5 bis 3 cm³/10 min niedriger als der MVR der Außenschichten, jeweils gemessen nach EN ISO 1133 (190°C, 5 kg Gewicht) ist. Das Coexverfahren läßt sich insbesondere prozessfähig durchführen, wenn der MVR der Mittelschicht im Bereich von 0,5 bis 11 cm³/10 min und insbesondere bevorzugt bei 2 bis 8 cm³/10 min und derjenige der Außenschichten vorzugsweise im Bereich von 2,5 bis 11 cm³/10 min und vorzugsweise im Bereich von 3 bis 10 cm³/10 min ist.

Die erfindungsgemäßen Polyesterfolien weisen eine überraschend hohe Transparenz auf. Die Dreischicht-Polyesterfolie wies in den im Folgenden aufgeführten Versuchen sogar eine höhere Transparenz auf als Monoschichtfolien, die keine Stärke enthielten. Auch wiesen Dreischichtfolien mit den erfindungsgemäßen Außenschichten eine höhere Transparenz auf als vergleichbare Dreischichtfolien mit einer Polybutylenadipat-coterephthalat-Außenschicht. Der Haze (Trübung) nach ASTM D1003: 2013 liegt vorzugsweise im Bereich von 35 bis 60% und insbesondere bevorzugt im Bereich von 40 bis 50%.

Die erfindungsgemäßen Polyesterfolien weisen weiterhin eine hohe Weiterreißfestigkeit in Querrichtung auf, was insbesondere auf die Stärkehaltige Mittelschicht zurückzuführen ist. Im Elmendorf-Test gemäß EN OSO 6383-2:2004 werden Weiterreißfestigkeiten von in der Regel größer 600 Nm in Querrichtung erreicht.

Die erfindungsgemäßen Polyesterfolien eignen sich aufgrund ihrer hohen Sauerstoffdurchlässigkeit und ihrer im Vergleich zu nicht abbaubaren Polypropylen- oder Polyethylen-Folien hohen Wasserdampfdurchlässigkeit hervorragend zur Verpackung von Obst und Gemüse, wobei das Obst und Gemüse bei 5°C einen Kohlendioxidausstoß von über 5 ml CO₂/kg·h und einen Wasserausstoß von über 200 mg/kg/sec/Mpa aufweist.

Insbesondere eignen sich die erfindungsgemäßen Polyesterfolien zur Verpackung von Lebensmittel wie Karotten, Pilzen, Rosenkohl oder Salat und tragen somit zu einer Verlängerung der Haltbarkeit dieser Lebensmittel entscheidend bei. Die Verwendung dieser 8 bis 20 µm und vorzugsweise 8 bis 15 µm dicken Polyesterfolien mit der zuvor genannten Zusammensetzung zur Verpackung von Karotten, Pilzen, Rosenkohl oder Salat ist somit ebenfalls bevorzugt.

Als Verpackungsmaterialien im Sinne der Erfindung sind auch Verbundmaterialien aus Papier/karton oder einer Kunststofffolie aus anderm als den obengenannten materialien, die mit der erfindungsgemäßen 8 bis 20 µm und vorzugsweise 8 bis 15 µm dicken Polyesterfolie überzogen sind.

### Beispiele

### Eingesetzte Materialien

A-1: Polymermischung aus 87% Gew.-% ecoflex® FS Blend C2200 (Polybutylensebacat-co-terephthalat der Fa. BASF SE), 9 Gew.-% Ingeo® 4044D (Polymilchsäure der Fa. NatureWorks), 3,6% Gew.-% Kreide, 0,3% Gew.-% Fettsäureamid, 0,1 Gew.-% Joncryl ADR 4368 (Glycidylacrylat der Fa. BASF SE)
A-2: Polymermischung aus 88,4 Gew.-% ecoflex® F Blend C1200 (Polybutylenadipat-co-terephthalat der Fa. BASF SE), 9 Gew.-% Ingeo® 4044D,2,4 Gew.-% Kreide, 0,1 Gew.-% Fettsäureamid, 0,1 Gew.-% Joncryl ADR 4368
B-1 Polymermischung aus 65 Gew.-% ecoflex® F Blend C1200 und 35 Gew.-% Amitroplast 8940 (thermoplastifizierte Stärke der Fa. Agrana)

**Tabelle 1: Folienaufbau**

| | V-1 | V-2 | 3 | 4 | V-3 | V-4 |
|---|---|---|---|---|---|---|
| Schichtaufbau | A-1 | A-1 | A-1/B-1/A-1 10/80/10 | A-1/B-1/A-1 10/80/10 | A-2 | B-1 |
| Dicke [µm] | 20 | 12 | 20 | 12 | 12 | 12 |
| Transparenz [%] | 92,2 | 93,2 | 92,8 | 93,5 | 93,1 | 92,9 |
| Haze [%] | 57,5 | 49,4 | 50,3 | 45,1 | 62,6 | 97,6 |
| Clarity [%] | 43,5 | 48,9 | 42,8 | 48,4 | 51,5 | 12,7 |

Die Sauerstoffdurchlässigkeit der Polyesterfolie bezieht sich in der Anmeldung stets auf die Meßmethode ASTM D3985-05:2010 gemessen bei 23 °C und getrocketem Sauerstoff.

Die Wasserdampfdurchlässigkeit der Polyesterfolie bezieht sich in der Anmeldung stets auf die Meßmethode ASTM F1249:2013 gemessen bei 23 °C und 100% rH.

Die Weiterreißfestigkeit wurde durch einen Elmendorf-Test gemäß EN ISO 6383-2:2004 mit einem Gerät der Fa. Protear an Prüfkörpern mit konstantem Radius (43 mm Risslänge) bestimmt.

Der E-Modul und die Ergebnisse des Zugversuchs wurden an im Blasfolienverfahren hergestellten Folien mit einer Dicke von etwa 12µm gemäß ISO 527-3:2003-07 ermittelt.

Die Bestimmung der Gesamttransmission, Haze (Trübung) und Clarity (Bildschärfe) wurde nach ASTM D1003: 2013 gemessen. Die Messungen wurden mit einem Transparenzmessgerät haze-gard plus der Fa. BYK-Gardner GmbH, welches nach ASTM D1003 misst, durchgeführt.

Im Sinne der vorliegenden Erfindung ist das Merkmal "biologisch abbaubar" für einen Stoff oder ein Stoffgemisch dann erfüllt, wenn dieser Stoff oder das Stoffgemisch entsprechend DIN EN 13432 einen prozentualen Grad des biologischen Abbaus von mindestens 90% aufweist.

Im Allgemeinen führt die biologische Abbaubarkeit dazu, dass die Polyester-(mischungen) in einer angemessenen und nachweisbaren Zeitspanne zerfallen. Der Abbau kann enzymatisch, hydrolytisch, oxidativ und/oder durch Einwirkung elektromagnetischer Strahlung, beispielsweise UV-Strahlung, erfolgen und meist zum überwiegenden Teil durch die Einwirkung von Mikroorganismen wie Bakterien, Hefen, Pilzen und Algen bewirkt werden. Die biologische Abbaubarkeit lässt sich beispielsweise dadurch quantifizieren, dass Polyester mit Kompost gemischt und für eine bestimmte Zeit gelagert werden. Beispielsweise wird gemäß DIN EN 13432 (Bezug nehmend auf ISO 14855) CO₂-freie Luft durch gereiften Kompost während des Kompostierens strömen gelassen und dieser einem definierten Temperaturprogramm unterworfen. Hierbei wird die biologische Abbaubarkeit über das Verhältnis der Netto-CO₂-Freisetzung der Probe (nach Abzug der CO₂-Freisetzung durch den Kompost ohne Probe) zur maximalen CO₂-Freisetzung der Probe (berechnet aus dem Kohlenstoffgehalt der Probe) als prozentualer Grad des biologischen Abbaus definiert. Biologisch abbaubare Polyester(mischungen) zeigen in der Regel schon nach wenigen Tagen der Kompostierung deutliche Abbauerscheinungen wie Pilzbewuchs, Riss- und Lochbildung.

Andere Methoden zur Bestimmung der Bioabbaubarkeit werden beispielsweise in ASTM D 5338 und ASTM D 6400-4 beschrieben.

Die eingangs genannten biologisch abbaubaren Polyesterfolien sind zur Herstellung von Schlauchfolien, Chill-Roll-Folien mit und ohne einer Orientierung in einem weiteren Verfahrensschritt, mit und ohne Metallisierung oder SiOx-Beschichtung geeignet.

Insbesondere eignen sich die erfindungsgemäßen Polyesterfolien enthaltend die Komponenten i) und iia bis iid für Schlauchfolien und Stretchfolien. Mögliche Anwendungen sind hier Bodenfaltbeutel, Seitennahtbeutel, Tragetaschen mit Griffloch, Schrumpfetiketten oder Hemdchentragetaschen, Inliner, Schwergutsäcke, Gefrierbeutel, Kompostierbeutel, Folienbeutel, abziehbare Verschlussfolie - transparent oder undurchsichtig - schweißbare Verschlussfolie - transparent oder undurchsichtig - , Frischhaltefolie (Stretchfolie), peelbare Deckelfolien.

## Patentansprüche

1. Biologisch abbaubare, 8 bis 20 µm dicke Dreischicht-Polyesterfolie mit einem Schichtaufbau A/B/C oder vorzugsweise A/B/A, wobei die beiden Außenschichten (A) oder (A, C) sich zusammensetzen aus:
Ai) 55 bis 99,99 Gew.-%, bezogen auf die Polyestermischung der Außenschichten, eines Polyesters ausgewählt aus der Gruppe bestehend aus: Polybutylensebacat-co-terephthalat, Polybutylensebacat-co-adipat-co-terephthalats, Polybutylensebacat-co-succinat-co-terephthalats oder Mischungen daraus oder einer Mischung von Polybutylensebacat-co-terephthalat und Polybutylenadipat-co-terephthalat;
Aii) 0,01 bis 5 Gew.-%, bezogen auf die Polyestermischung der Außenschichten, mindestens eines Additivs ausgewählt aus der Gruppe bestehend aus: einem Wachs, einem Weichmacher, einem Nukleiierungsmittel, Antifogmittel, Füllstoff und einem Antiblockmittel; und
Aiii) 0 bis 44,99 Gew.-%, bezogen auf die Polyestermischung der Außenschichten, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
und die Mittelschicht B sich zusammensetzt aus:
Bai) 40 bis 75 Gew.-%, bezogen auf die Mischung der Mittelschicht, eines biologisch abbaubaren, aliphatisch-aromatischen Polyesters;
Baii) 25 bis 40 Gew.-%, bezogen auf die Mischung der Mittelschicht, Stärke mit einem Weichmachergehalt von 0 bis 5 Gew.-%, bezogen auf das Gesamtgewicht der Komponente Baii); und
Baiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
oder
Bbi) 25 bis 70 Gew.-%, bezogen auf die Mischung der Mittelschicht, eines biologisch abbaubaren, aliphatisch-aromatischen Polyesters
Bbii) 30 bis 55 Gew-%, bezogen auf die Mischung der Mittelschicht Stärke mit einem Weichmacheranteil von 5 bis 35 Gew.-%, bezogen auf das Gesamtgewicht der Komponente Bbii); und
Bbiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung.

2. Folie nach Anspruch 1, wobei der Polyester Ai der Außenschichten Polybutylensebacat-co-terephthalat ist.

3. Folie nach Anspruch 1 oder 2, wobei der aliphatisch-aromatische Polyester der Mittelschicht Polybutylensebacat-co-terephthalat und/oder Polybutylenadipat-co-terephthalat ist.

4. Folie nach einem der Ansprüche 1 bis 3, wobei der MVR der Mittelschicht bei einem Wassergehalt kleiner 2000 ppm zwischen 0,5 bis 3 cm³/10 min niedriger ist als der MVR der Außenschichten, jeweils gemessen nach EN ISO 1133 (190°C, 5 kg Gewicht).

5. Folie nach einem der Ansprüche 1 bis 4, wobei die Außenschicht jeweils 8 bis 25 % und die Mittelschicht 50 bis 84 % der gesamten Foliendicke ausmacht.

6. Folie nach einem der Ansprüche 1 bis 5, wobei die Aussenschichten 1 bis 35 Gew.-% Polymilchsäure, bezogen auf die Zusammensetzung der Aussenschichten, enthalten.

7. Folie nach Anspruch 1 bis 6 mit einem Haze (Trübung) nach ASTM D1003:2013 von 35 bis 60%.

8. Folie nach Anspruch 1 bis 7 mit einer Sauerstoffdurchlässigkeit gemessen nach ASTM D3985-05:2010 zwischen 5500 und 18000 ml/m²/Tag.

9. Folie nach Anspruch 1 bis 7 mit einer mit einer Wasserdampfdurchlässigkeit gemessen nach ASTM F1249:2013 von 200 bis 1000 g/m²/Tag.

10. Verwendung einer Folie gemäß Anspruch 1 bis 9 zur Verpackung von Salat, Obst und Gemüse.

11. Coextrusionsverfahren zur Herstellung einer Dreischicht-Polyesterfolie mit einem Schichtaufbau A/B/C oder vorzugsweise A/B/A, wobei die beiden Außenschichten (A) oder (A, C) sich zusammensetzen aus:
Ai) 55 bis 99,99 Gew.-%, bezogen auf die Polyestermischung der Außenschichten, eines biologisch abbaubaren, aliphatisch-aromatischen Polyesters;
Aii) 0,01 bis 5 Gew.-%, bezogen auf die Polyestermischung der Außenschichten, mindestens eines Additivs ausgewählt aus der Gruppe bestehend aus: einem Wachs, einem Weichmacher, einem Nukleiierungsmittel, Antifogmittel, Füllstoff und einem Antiblockmittel; und
Aiii) 0 bis 44,99 Gew.-%, bezogen auf die Polyestermischung der Außenschichten, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
und die Mittelschicht B sich zusammensetzt aus:
Bai) 40 bis 75 Gew.-%, bezogen auf die Mischung der Mittelschicht, eines biologisch abbaubaren, aliphatisch-aromatischen Polyesters;
Baii) 25 bis 40 Gew.-%, bezogen auf die Mischung der Mittelschicht, Stärke mit einem Weichmachergehalt von 0 bis 5 Gew.-%, bezogen auf das Gesamtgewicht der Komponente Baii); und
Baiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung;
oder
Bbi) 25 bis 70 Gew.-%, bezogen auf die Mischung der Mittelschicht, eines biologisch abbaubaren, aliphatisch-aromatischen Polyesters
Bbii) 30 bis 55 Gew-%, bezogen auf die Mischung der Mittelschicht, Stärke mit einem Weichmacheranteil von 5 bis 35 Gew.-%, bezogen auf das Gesamtgewicht der Komponente Bbii); und
Bbiii) 0 bis 20 Gew.-%, bezogen auf die Mischung der Mittelschicht, eines weiteren biologischen abaubaren Polymeren ausgewählt aus der Gruppe bestehend aus: Polymilchsäure (PLA), Polycaprolacton (PCL), Polyhydroxyalkanoat, Polypropylencarbonat (PPC) oder Polyester, hergestellt aus aliphatischen Dicarbonsäuren und einer aliphatischen Dihydroxyverbindung; und
wobei der MVR der Mittelschicht bei einem Wassergehalt kleiner 2000 ppm zwischen 0,5 bis 3 cm³/10 min niedriger ist als der MVR der Außenschichten, jeweils gemessen nach EN ISO 1133 (190°C, 5 kg Gewicht).

## Claims

1. A biodegradable three-layer polyester film of 8 to 20 µm in thickness having a layer construction A/B/C or preferably A/B/A, wherein the two outer layers (A) or (A, C) are composed of:
Ai) 55% to 99.99% by weight based on the polyester mixture of the outer layers of a polyester selected from the group consisting of: polybutylene sebacate-co-terephthalate, polybutylene sebacate-co-adipate-co-terephthalate, polybutylene sebacate-co-succinate-co-terephthalate or mixtures thereof or a mixture of polybutylene sebacate-co-terephthalate and polybutylene adipate-co-terephthalate;
Aii) 0.01% to 5% by weight based on the polyester mixture of the outer layers of at least one additive selected from the group consisting of: a wax, a plasticizer, a nucleating agent, antifogging agent, filler and an antiblocking agent; and
Aiii) 0% to 44.99% by weight based on the polyester mixture of the outer layers of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound;
and the middle layer B is composed of:
Bai) 40% to 75% by weight based on the mixture of the middle layer of a biodegradable aliphatic-aromatic polyester;
Baii) 25% to 40% by weight based on the mixture of the middle layer of starch having a plasticizer content of 0% to 5% by weight based on the total weight of the component Baii); and
Baiii) 0% to 20% by weight based on the mixture of the middle layer of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound;
or
Bbi) 25% to 70% by weight based on the mixture of the middle layer of a biodegradable aliphatic-aromatic polyester;
Bbii) 30% to 55% by weight based on the mixture of the middle layer of starch having a plasticizer content of 5% to 35% by weight based on the total weight of the component Bbii); and
Bbiii) 0% to 20% by weight based on the mixture of the middle layer of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound.

2. The film according to claim 1, wherein the polyester Ai of the outer layers is polybutylene sebacate-co-terephthalate.

3. The film according to claim 1 or 2, wherein the aliphatic-aromatic polyester of the middle layer is polybutylene sebacate-co-terephthalate and/or polybutylene adipate-co-terephthalate.

4. The film according to any of claims 1 to 3, wherein the MVR of the middle layer measured at a water content of less than 2000 ppm is between 0.5 to 3 cm³/10 min lower than the MVR of the outer layers in each case measured according to EN ISO 1133 (190°C, 5 kg weight).

5. The film according to any of claims 1 to 4, wherein the outer layer in each case makes up 8% to 25% and the middle layer makes up 50% to 84% of the entire film thickness.

6. The film according to any of claims 1 to 5, wherein the outer layers comprise 1% to 35% by weight of polylactic acid based on the composition of the outer layers.

7. The film according to any of claims 1 to 6 having a haze according to ASTM D1003:2013 of 35% to 60%.

8. The film according to any of claims 1 to 7 having an oxygen permeability measured according to ASTM D3985-05:2010 between 5500 and 18 000 ml/m²/day.

9. The film according to any of claims 1 to 7 having a water vapor permeability measured according to ASTM F1249:2013 of 200 to 1000 g/m²/day.

10. The use of a film according to any of claims 1 to 9 for packaging of salad, fruit and vegetables.

11. A coextrusion process for producing a three-layer polyester film having a layer construction A/B/C or preferably A/B/A, wherein the two outer layers (A) or (A, C) are composed of:
Ai) 55% to 99.99% by weight based on the polyester mixture of the outer layers of a biodegradable aliphatic-aromatic polyester;
Aii) 0.01% to 5% by weight based on the polyester mixture of the outer layers of at least one additive selected from the group consisting of: a wax, a plasticizer, a nucleating agent, antifogging agent, filler and an antiblocking agent; and
Aiii) 0% to 44.99% by weight based on the polyester mixture of the outer layers of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound;
and the middle layer B is composed of:
Bai) 40% to 75% by weight based on the mixture of the middle layer of a biodegradable aliphatic-aromatic polyester;
Baii) 25% to 40% by weight based on the mixture of the middle layer of starch having a plasticizer content of 0% to 5% by weight based on the total weight of the component Baii); and
Baiii) 0% to 20% by weight based on the mixture of the middle layer of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound;
or
Bbi) 25% to 70% by weight based on the mixture of the middle layer of a biodegradable aliphatic-aromatic polyester;
Bbii) 30% to 55% by weight based on the mixture of the middle layer of starch having a plasticizer content of 5% to 35% by weight based on the total weight of the component Bbii); and
Bbiii) 0% to 20% by weight based on the mixture of the middle layer of a further biodegradable polymer selected from the group consisting of: polylactic acid (PLA), polycaprolactone (PCL), polyhydroxyalkanoate, polypropylene carbonate (PPC) or polyester produced from aliphatic dicarboxylic acids and an aliphatic dihydroxy compound; and
wherein the MVR of the middle layer measured at a water content of less than 2000 ppm is between 0.5 to 3 cm³/10 min lower than the MVR of the outer layers in each case measured according to EN ISO 1133 (190°C, 5 kg weight).

## Revendications

1. Feuille de polyester biodégradable, à trois couches, d'une épaisseur de 8 à 20 µm, présentant une structure de couches A/B/C ou de préférence A/B/A, les deux couches externes (A) ou (A, C) étant constituées par :
Ai) 55 à 99, 99% en poids, par rapport au mélange de polyester des couches externes, d'un polyester choisi dans le groupe constitué par : poly(sébacate-co-téréphtalate de butylène), poly(sébacate-co-adipate-co-téréphtalate de butylène), poly(sébacate-co-succinate-co-téréphtalate de butylène) ou leurs mélanges ou un mélange de poly(sébacate-co-téréphtalate de butylène) et de poly(adipate-co-téréphtalate de butylène) ;
Aii) 0,01 à 5% en poids, par rapport au mélange de polyester des couches externes, d'au moins un additif choisi dans le groupe constitué par : une cire, un plastifiant, un agent de nucléation, un agent antibuée, une charge et un agent antiadhésif ; et
Aiii) 0 à 44,99% en poids, par rapport au mélange de polyester des couches externes, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy ;
et la couche centrale B étant constituée par :
Bai) 40 à 75% en poids, par rapport au mélange de la couche centrale, d'un polyester aliphatique-aromatique biodégradable ;
Baii) 25 à 40% en poids, par rapport au mélange de la couche centrale, d'amidon présentant une teneur en plastifiant de 0 à 5% en poids, par rapport au poids total du composant Baii) ; et
Baiii) 0 à 20% en poids, par rapport au mélange de la couche centrale, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy ;
ou
Bbi) 25 à 70% en poids, par rapport au mélange de la couche centrale, d'un polyester aliphatique-aromatique biodégradable ;
Bbii) 30 à 55% en poids, par rapport au mélange de la couche centrale, d'amidon présentant une proportion de plastifiant de 5 à 35% en poids, par rapport au poids total du composant Bbii) ; et
Bbiii) 0 à 20% en poids, par rapport au mélange de la couche centrale, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy.

2. Feuille selon la revendication 1, le polyester Ai des couches externes étant le poly(sébacate-co-téréphtalate de butylène).

3. Feuille selon la revendication 1 ou 2, le polyester aliphatique-aromatique de la couche centrale étant le poly(sébacate-co-téréphtalate de butylène) et/ou le poly(adipate-co-téréphtalate de butylène).

4. Feuille selon l'une quelconque des revendications 1 à 3, le MVR de la couche centrale, à une teneur en eau inférieure à 2000 ppm, étant plus bas d'entre 0,5 à 3 cm³/10 min que le MVR des couches externes, mesurés à chaque fois selon la norme EN ISO 1133 (190°C, sous un poids de 5 kg).

5. Feuille selon l'une quelconque des revendications 1 à 4, la couche externe représentant à chaque fois 8 à 25% et la couche centrale 50 à 84% de l'épaisseur totale de la feuille.

6. Feuille selon l'une quelconque des revendications 1 à 5, les couches externes contenant 1 à 35% en poids de poly(acide lactique) par rapport à la composition des couches externes.

7. Feuille selon la revendication 1 à 6 présentant un trouble (Haze) selon la norme ASTM D1003:2013 de 35 à 60%.

8. Feuille selon la revendication 1 à 7 présentant une perméabilité à l'oxygène, mesurée selon la norme ASTM D3985-05:2010, d'entre 5500 et 18.000 ml/m²/jour.

9. Feuille selon la revendication 1 à 7 présentant une perméabilité à la vapeur d'eau mesurée selon la norme ASTM F1249:2013 de 200 à 1000 g/m²/jour.

10. Utilisation d'une feuille selon la revendication 1 à 9 pour l'emballage de salade, de fruits et de légumes.

11. Procédé de coextrusion pour la fabrication d'une feuille de polyester à trois couches présentant une structure de couches A/B/C ou de préférence A/B/A, les deux couches externes (A) ou (A, C) étant constituées par :
Ai) 55 à 99,99% en poids, par rapport au mélange de polyester des couches externes, d'un polyester aliphatique-aromatique biodégradable ;
Aii) 0,01 à 5% en poids, par rapport au mélange de polyester des couches externes, d'au moins un additif choisi dans le groupe constitué par : une cire, un plastifiant, un agent de nucléation, un agent antibuée, une charge et un agent antiadhésif ; et
Aiii) 0 à 44,99% en poids, par rapport au mélange de polyester des couches externes, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy ;
et la couche centrale B étant constituée par :
Bai) 40 à 75% en poids, par rapport au mélange de la couche centrale, d'un polyester aliphatique-aromatique biodégradable ;
Baii) 25 à 40% en poids, par rapport au mélange de la couche centrale, d'amidon présentant une teneur en plastifiant de 0 à 5% en poids, par rapport au poids total du composant Baii) ; et
Baiii) 0 à 20% en poids, par rapport au mélange de la couche centrale, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy ;
ou
Bbi) 25 à 70% en poids, par rapport au mélange de la couche centrale, d'un polyester aliphatique-aromatique biodégradable
Bbii) 30 à 55% en poids, par rapport au mélange de la couche centrale, d'amidon présentant une proportion de plastifiant de 5 à 35% en poids, par rapport au poids total du composant Bbii) ; et
Bbiii) 0 à 20% en poids, par rapport au mélange de la couche centrale, d'un autre polymère biodégradable choisi dans le groupe constitué par : le poly(acide lactique) (PLA), la polycaprolactone (PCL), un polyhydroxyalcanoate, le poly(carbonate de propylène) (PPC) ou le polyester, préparé à partir d'acides dicarboxyliques aliphatiques et d'un composé aliphatique dihydroxy ; et
le MVR de la couche centrale, à une teneur en eau inférieure à 2000 ppm, étant plus bas d'entre 0,5 à 3 cm³/10 min que le MVR des couches externes, mesurés à chaque fois selon la norme EN ISO 1133 (190°C, sous un poids de 5 kg).
